# EUROPEAN PATENT SPECIFICATION

(11) **EP 4 210 465 B1**
(45) Date of publication and mention of the grant of the patent: **26.03.2025**
(21) Application number: 21783346.6
(22) Date of filing: 08.09.2021
(51) Int. Cl.: A01D 46/26

(54) **A PORTABLE DEVICE FOR HARVESTING SMALL FRUITS**
TRAGBARE VORRICHTUNG ZUM ERNTEN KLEINER FRÜCHTE
DISPOSITIF PORTABLE POUR RÉCOLTER DES PETITS FRUITS

(30) Priority: 08.09.2020 IT 202000021178
(43) Date of publication of application: 19.07.2023
(73) Proprietor: VIVARELLI, Alice, 40042 Lizzano in Belvedere (BO) (IT)
(72) Inventor: VIVARELLI, Alice, 40042 Lizzano In Belvedere (BO) (IT); MATTAROZZI, Nicolò, 40038 Vergato (BO) (IT)
(74) Representative: ABM Agenzia Brevetti & Marchi
(86) International application number: PCT/IB2021/058150
(87) International publication number: WO 2022/053938

(56) References cited:
- WO-A1-2012/143231
- WO-A1-2012/143231
- WO-A1-2017/002047
- WO-A1-2017/002047
- WO-A2-2007/129207
- WO-A2-2007/129207

## Description

### Field of the invention

The present invention relates to a device for harvesting small fruits from a plant. In particular, it relates to a portable device arranged to detach such fruits as olives, coffee, almonds, pistachios and the like by shaking the branches of the plant and causing them to vibrate.

### Prior art

Several devices are known for harvesting small fruits, in particular olives, by causing a plurality of rods to vibrate and/or rotate, said rods arranged to shake the end portions of the branches.

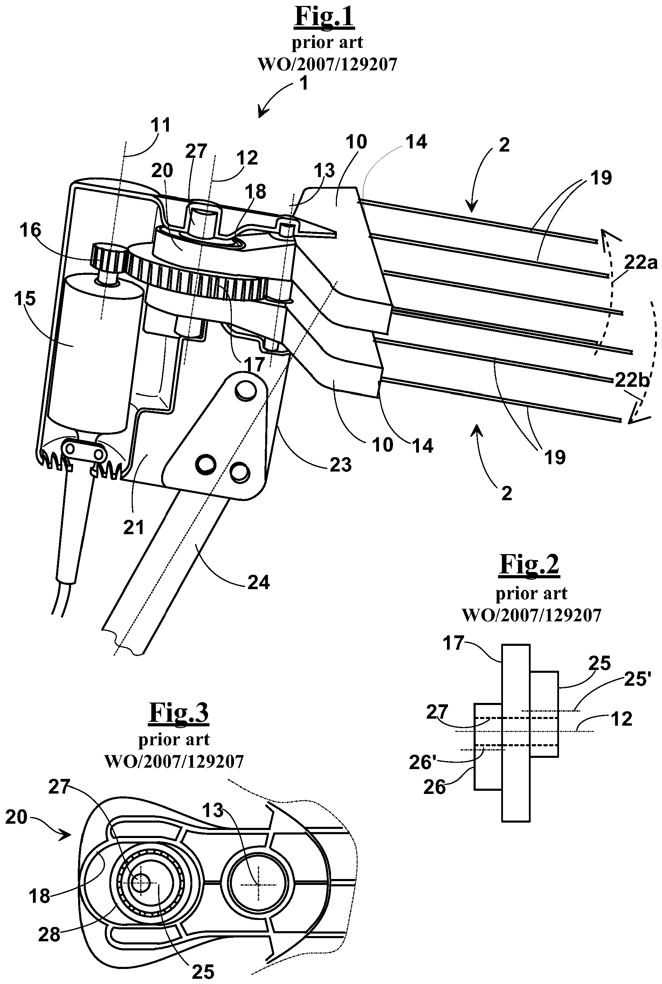

Such a device 1, as described in WO/2007/129207 and shown in Figs. 1 to 3, comprises two comb-like elements 2, each consisting of an elongated base body 10, and of a plurality of rods 19 extending from a same face 14 of base bodies 10. The base bodies 10 are pivotally connected to such a support as a carter 23 through hinges having a common axis 13, in such a way that comb-like elements 2 are arranged on parallel planes and generally face each other. In particular, in a predetermined relative position, the comb-like elements are overlapped, if observed laterally. An electric motor 15 having an axis 11 is housed in carter 23, along with a transmission mechanism 16,17 configured to cause two comb-like elements 2 to oscillate in such a way that the comb-like elements perform in-phase and symmetric rotational alternated movements 22a/b. A pole 24 has a first end connected to support 23 and a second end, not shown, at which a handle is provided.

A drawback of device 1 is that the movement of the comb-like elements 10 creates a relatively small working area, depending on the size of comb-like elements 10.

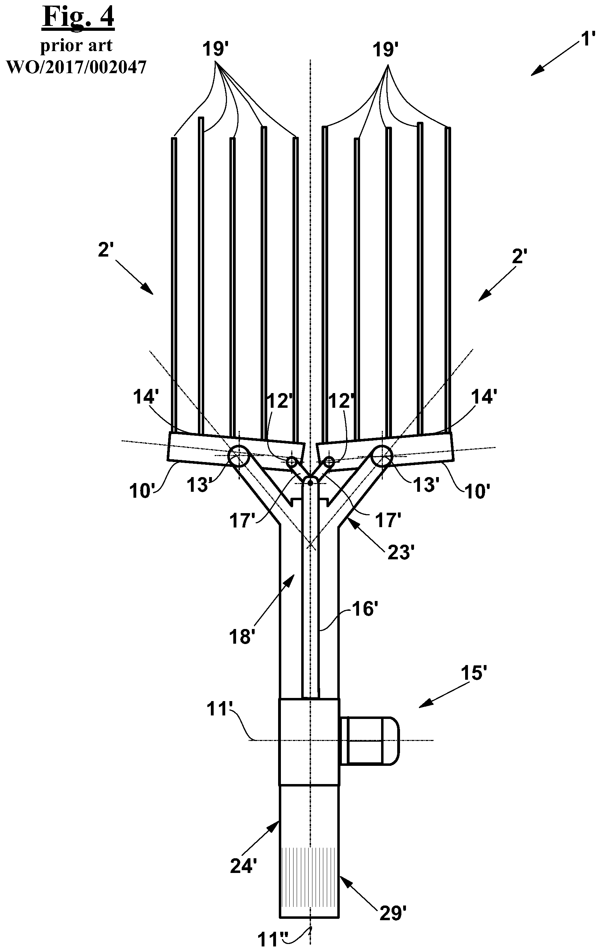

WO/2017/002047 describes a different device 1' for harvesting small fruits, as diagrammatically shown in Fig. 4, in which components corresponding to the components of device of Fig. 1 are generally indicated by equal numbers to which a superscript is added. In this device, comb-like elements 2' are arranged adjacent to each other and are substantially coplanar instead of being overlapped and parallel as in the device 1 of Fig. 1. This arrangement solves the above-mentioned working area extension issue. Comb-like elements 2' are arranged to perform rotational alternated movements symmetrically to each other about respective axes 13'. To this purpose a transmission 18' is provided that changes a continuous rotation of a motor 15' first into a translational alternated movement of a shaft 16' and then into rotational alternated movements of comb-like elements 2' through a couple of links 17' hinged at an end 16', on the one hand, and to respective base members 10' of comb-like elements 2' on the other hand.

This device has the drawback that the transmission is mechanically too complicate and too heavy.

In particular, an arrangement of the motor at the head of the device instead of at the handle portion is preferable in order to simplify the transmission, in particular, if last generation brushless motors are used, which are advantageously very light. A heavy transmission as in WO/2017/002047 would practically eliminate this advantage.

### Summary of the invention

It is therefore a feature of the present invention to provide a portable device for harvesting small fruits from a plant by shaking the end portions of the branches causing them to vibrate, which makes it possible to create a wide working surface in a plane working area without excessively complicating the transmission.

It is a particular feature of the invention to provide such a device in which the motor can be mounted close to the shaking head, without significantly increasing the weight thereof, and without causing discomfort to a user.

These and other objects are achieved by a portable device for harvesting small fruits from a plant by causing a vibration or a shaking movement thereof, as defined by claim 1. Advantageous exemplary embodiments of the device are defined by the dependent claims.

According to the invention, such a device comprises:
- a support comprising a pole equipped with a handle portion at a handle end thereof;
- a couple of comb-like elements pivotally mounted to the support through respective hinges, the comb-like elements comprising:
   - respective elongated base members extending along respective longitudinal axes;
   - respective arrays of rods extending from the elongated base members oppositely to the support,
   wherein the longitudinal axes are substantially coplanar arranged in a movement plane, so that the comb-like elements are placed beside each other if observed transversally to the longitudinal axes,
- a drive unit mounted to the support,
wherein
- the hinges have a same rotation axis substantially orthogonal to the movement plane;
- respective tang portions extend from the elongated base members, away from the movement plane, the tang portions comprising the respective rotatable portions of the hinges, so that the hinges have rotation planes remotely predetermined by and opposite to each other with respect to the movement plane,
- the drive unit is arranged for causing each of the rotatable portions of the hinges, and therefore each of the comb-like elements, to perform rotational alternated movements between two limit angular positions with respect to the rotation axis.

With such a technical solution, several advantages are obtained, which cannot be attained at the same time by a device like those described in the above-mentioned prior art.

More in detail, the side-to-side arrangement of the comb-like elements, when observed transversally, makes it possible to maximize the working area defined by their movements, i.e. the extension of the portion of the plant that is caused to vibrate. At a same time, the tang portion with hinges rotatably arranged about a same rotation axis simplifies the transmission.

Preferably, the drive unit is configured in such a way that the rotational alternated movements of the two comb-like elements are mutually symmetrical in-phase movements. In other words, when operating the device, the speed and the acceleration of any two mutually symmetrical points of respective comb-like elements have the same value and opposite directions, i.e., their directions are symmetrical in a plane passing through the rotation axis of the hinges and perpendicular to the movement plane. This way, inertial effects on the support are eliminated, which facilitates the work of the operator.

However, in another exemplary embodiment, the drive unit can be configured in such a way that the rotational alternated movements of the two comb-like elements are mutually parallel in-phase movements. In other words, when operating the device, the speed and the acceleration of any two mutually symmetrical points of respective comb-like elements have the same value and the same direction. In fact, it has been observed that this increases the fruit collection efficiency in some plant conformations.

Preferably, the hinges have a same pin as a fixed portion connected to the support and arranged along the common rotation axis of the two hinges. This allows for a less cumbersome connection between the base members of the comb-like elements and the support.

In an exemplary embodiment, the drive unit can comprise a motor mounted at the handle end. This makes it possible to reduce the weight of the portion of the device that must be raised when collecting fruits at a significant height above the ground. This way, the device is easier to handle than in the case of a motor mounted close to the two comb-like elements, which reduces the user's fatigue.

In another exemplary embodiment, the support comprises a box arranged at one end of the pole opposite to that of handle, and the drive unit is mounted to this box. This way, a simpler motion transmission is possible.

Preferably, the drive unit comprises an electric motor, in particular a battery-supplied DC motor, and the device comprises a housing for at least one battery configured to form an electric connection between the battery or the batteries and the electric motor.

Preferably, the electric motor of the drive unit is an brushless electric motor. Brushless motors, besides being more reliable and more durable, are also lighter than conventional electric motors of the same power. For this reason, they are particularly advantageous if the motor of the drive unit has to be arranged at the end of the pole of the support opposite to the handle portion. Such an arrangement of a brushless motor allows for a simple transmission structure, since the motor is mounted near the comb-like elements, and at the same time reduces the weight that has to be raised when collecting fruits at a significant height above the ground, which reduces the user's fatigue and improves the collection rate accordingly.

Several well-known technical solutions are possible to obtain the rotational alternated movement of the comb-like elements. In particular, the drive unit can be made as in Figs. 2 and 3, i.e., as described in patent application WO/2007/129207, which is incorporated herein by reference. Therefore, in a preferred exemplary embodiment, each tang portion has an elongated hole, and the drive unit comprises:
- a motor;
- a couple of cylindrical pins each slidingly engaged within the elongated hole of a respective tang portion, wherein the cylindrical pins are pivotally actuated by the motor and eccentrically arranged about a second rotation axis,
wherein the cylindrical pins have axes angularly spaced apart about the second rotation axis by a predetermined phase angle.

This is a particularly compact and easy-to-make solution, besides requiring very limited maintenance. However, in comparison with what is described in WO/2007/129207, the axes of the cylindrical pins can be angularly spaced apart from each other by any angle about the second rotation axis, i.e., they are not necessarily at 180° from each other, even if this is one of the preferred arrangements, so that the rotational alternated movements of the two comb-like elements are opposite to each other, which has the previously mentioned advantages. In another preferred arrangement, the angle is 0°, so that the rotational alternated movements of the two comb-like elements are parallel to each other, which has the previously mentioned advantages.

In particular, the drive unit can comprise at least two gear wheels or two friction wheels having a predetermined transmission ratio with respect to each other, the at least two wheels forming a motion transmission mechanism, the output wheel of the transmission mechanism having the second rotation axis as an own rotation axis, and the cylindrical pins are arranged on opposite faces of the output wheel. This allows for a particularly compact and light arrangement in which the rotation axes of the two hinges re coincident.

In an advantageous exemplary embodiment, the rods of a couple of innermost rods, each arranged at a minimum distance from the longitudinal axis with respect to the other rods of a same comb, are mounted skew to each other, so as to keep themselves at a mutual distance longer than a minimum predetermined distance when the comb-like elements are near their closed configuration. In fact, during the rotational alternative plane movement of the comb-like elements, the mutually skew arrangement of the innermost rods is maintained. This way, two rods of respective comb-like elements are prevented from hitting each other or from sliding on each other, or in any case from approaching each other too much, thus forming a sort of scissors that can cut or in any case damage branches and twigs of the plant, which occurs, on the contrary with most prior art devices.

In particular, concerning the other rods, the rods of pairs of corresponding rods that have the same rank with respect to the distance from the longitudinal axis are also mounted skew, in order to be kept at a predetermined mutual distance when the comb-like elements are near the closed configuration.

The base members can have a substantially parallelpiped shape with a face arranged perpendicularly to the direction of the longitudinal axis, and the innermost rods or the corresponding rods are arranged at respective angles with respect to this face. For instance, the rods can have a cylindrical shape and/or a parallelpiped shape and can be arranged within respective holes or rod housings having a corresponding shape, made at said respective angles on said face.

In an exemplary embodiment, the innermost rods, and in particular also the other corresponding rods that have the same rank with respect to the distance from the axis, are arranged symmetrically with respect to the longitudinal axis of the device. This can be obtained, in particular, by providing pairs of rod housings or rod holes in the first and second bases, at symmetrical angles with respect to the longitudinal axis of the device.

Advantageously, each of the two arrays of rods comprises five rods. Due to the shorter distance between the comb-like elements, which is allowed by the connection provided by a single pin arranged at a central position of the support, it becomes possible to arrange more shaking elements, i.e. one further rod In addition to the four conventional rods for each comb, with a same length of the bases, thus obtaining a device providing a higher shaking efficiency with a same width and, accordingly, a same size.

Advantageously, the device comprises an articulated means for orienting the comb-like elements with respect to the pole by an angle set between -30° and +30°, preferably between -15° and +15°.

### Brief description of the drawings

**The** invention will be now shown with the description of some exemplary embodiments, exemplifying but not limitative, with reference to the attached drawings, in which:
- Fig. 1 is a side perspective view of a prior art device for harvesting fruits, in which a cover of a box enclosing a drive and transmission unit is removed;
- Figs. 2 and 3 are diagrammatical side and top plan views, respectively, of some details of the drive and transmission unit of the prior art device of Fig. 1;
- Fig. 4 is an elevational side view of another prior art device for harvesting fruits, in which a cover of a box enclosing a drive and transmission unit is removed;
- Figs. 5 and 6 are diagrammatical bottom views of a device for harvesting fruits according to the invention, with the comb-like elements in two different relative positions;
- Figs. 7 and 8 are diagrammatical side and front views, respectively, of the device of Figs. 5 and 6;
- Fig. 9 is a perspective view of a device according to an exemplary embodiment of the invention;
- Fig. 10 is an elevational front view of a base of a comb-like element of the device of Fig. 9;
- Figs. 11 and 12 are front and side views, respectively, of a comb-like element of the device of Fig. 9;
- Fig. 13 is an exploded perspective view of a device according to an exemplary embodiment of the invention;
- Fig. 14 is a further exploded perspective view of a comb-like element of the device of Fig. 13;
- Figs. 15 and 16 are perspective views of a base of a comb-like element of the device of Fig. 13.

### Description of exemplary embodiments of the invention

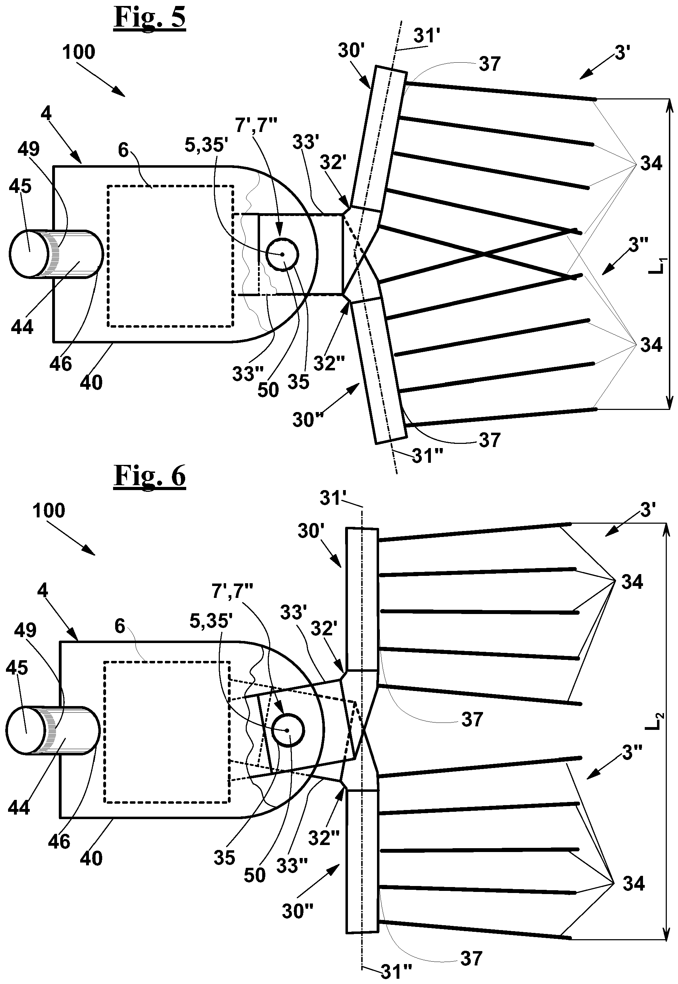

With reference to Figs. 5-8, in a portable device 100 for harvesting small fruits from a plant, a support 4 comprises a handle pole 44, a couple of comb-like shaking elements 3',3" pivotally connected to support 4 through respective hinges 7',7", and a drive unit 6 mounted to support 4, for example in a housing or box 40 of support 4.

Two comb-like elements 3',3" arranged for performing out a vibrational movement with respect to support 4, in order to shake branches and twigs of a plant, and to cause the fruits hanging on the branches to fall down accordingly. More in particular, each comb 3',3" comprises a base 30',30" having an elongated shape, whose longitudinal direction is defined by a longitudinal axis 31',31". An array of rods 34 is mounted to basis 30',30", preferably by removable engagement means, said array of rods extending from base members 30',30" on the side opposite to support 4.

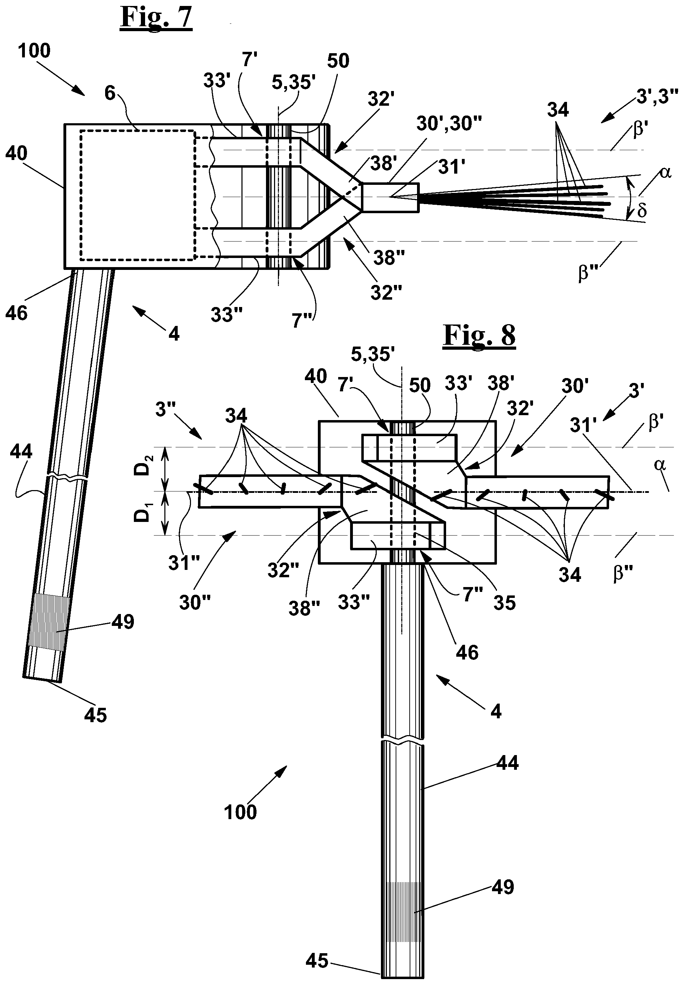

Preferably, elongated bases 30',30" have a substantially prismatic shape, in the case shown in the figure a parallelepiped shape, and rods 34 extend from a face 37 of the prism or parallelepiped oriented oppositely to support 4, i.e., to box 40. In particular, rods 34 extend within a dihedral angle of predetermined amplitude δ (Fig. 7) having longitudinal axis 31',31" as its edge.

A conventional handle portion 49 is provided at an end 45 of pole 44 to assist a user to manipulate device 100. Pole 44 is shown in the figures regardless the proportions. In soe exemplary embodiments, not shown, a means is provided for extending pole 44, such as telescopic extension means or removable extension elements conventionally connected to standard length pole 44.

Drive unit 6, as anticipated, is mounted to support 4. Basically, drive unit 6 comprises a motor, for example a preferably battery-supplied electric motor on board of device 100, and a motion transmission mechanism from the motor to comb-like elements 3',3", more in detail to base members 30',30". The transmission mechanism can possibly comprise a reduction gear portion. In the exemplary embodiments shown in the figures, drive unit 6 is completely contained within box 40 of support 4, which is connected to one end 46 of pole 44 opposite to handle end 45, at least the motor run/stop key being advantageously provided at the handle end, if an electric motor is used.

In this case, motor is preferably a brushless motor, in order not to excessively increase the weight of the head portion of device 100, so as t facilitate the manipulation of the same.

However, in some exemplary embodiments, not shown in the figures, drive unit 6 can be at least in part arranged at handle end 45 of pole 44. For example, at least the motor can be mounted at handle end 45, the transmission mechanism extending along pole 44 and possible box 40 of support 4.

As Figs. 7 and 8 show, base members 30',30" of comb-like elements 3',3" are substantially coplanar arranged on a movement plane α, more in detail, longitudinal axes 31',31" are substantially contained in movement plane α. Therefore, if device 100 is observed transversally to longitudinal axes 31',31", the comb-like elements are arranged beside each other, as Fig. 6 clearly shows.

According to the invention, hinges 7',7", through which comb-like elements 3',3" are connected to support 4, have rotation axes coincident in a same axis 5 that is substantially orthogonal to movement plane α.

As shown still in Figs. 7 and 8, each hinge 7',7" has a fixed portion integral to support 4 that, in the depicted exemplary embodiment, comprises a same cylindrical pin 50 arranged along axis 5. Each hinge 7',7" also comprises a rotatable portion integral to basis 30',30" of a respective comb 3',3". More in detail, according to the invention, each comb 3',3" comprises a tang portion 32',32" extending from respective base 30',30" and a preferably plane end portion 33',33" forming the movable part of hinge 7',7", end portion 33',33" arranged along rotation planes β',β" opposite to each other with respect to movement plane α and at predetermined distances D₁, D₂ from the latter. Hinges 7',7" have therefore suitably spaced-apart rotation planes β',β" opposite to each other with respect to movement plane α of comb-like elements 3',3".

More in detail, tang portion 32',32" comprises a transversal connection part 38', 38" at an angle with respect to basis 30',30", i.e., at an angle to longitudinal axis 31',31" thereof, and a connection part 33',33" parallel to the longitudinal axis that, in the depicted case, has a hole 35 engaging with pin 50 to form hinge 7',7".

Still according to the invention, drive unit 6 is arranged to cause each rotatable portions 33',33" of hinges 7',7", and therefore comb-like elements 3',3", to perform a rotational alternated movement between two angular limit positions about rotation axis 5.

The rotational alternated movement of each comb 3',3" is not necessarily related to the rotational alternated movement of the other comb, in other words the two alternate movements do not have necessarily the same period. Figs. 5 and 6 refer to a particular but preferred exemplary embodiment in which the movements of two comb-like elements 3',3" are synchronous, i.e. they are in-phase movements, and opposite, so that two comb-like elements 3',3" periodically move from a contracted configuration, as shown in Fig. 5, in which the distance of corresponding elements of comb-like elements 3',3" is at a minimum, to an expanded configuration, as shown in Fig. 6, in which the distance of the corresponding elements is at a maximum. In this case, the plan space occupied by two comb-like elements 3',3" also changes from a minimum value, as shown in Fig. 5, to a maximum value, as shown in Fig. 6, the width between the free ends of the outermost rods, in a top plan view, changing from a value L₁ typically set between 220 and 280 mm, preferably about 250 mm, to a value L₂ typically set between 360 and 420 mm, preferably about 390 mm.

In another preferred exemplary embodiment, not shown in the figures, the rotational movements of two comb-like elements 3',3" are even in this case synchronous movements, i.e., in-phase movements, but are parallel to each other, so that the distance of the corresponding elements of two comb-like elements 3',3" is kept substantially unchanged, as well as the plan space occupied by two comb-like elements 3',3". In other words, two comb-like elements 3',3" periodically moves from a right-displaced configuration to a left-displaced configuration for someone looking at device 100 from a side.

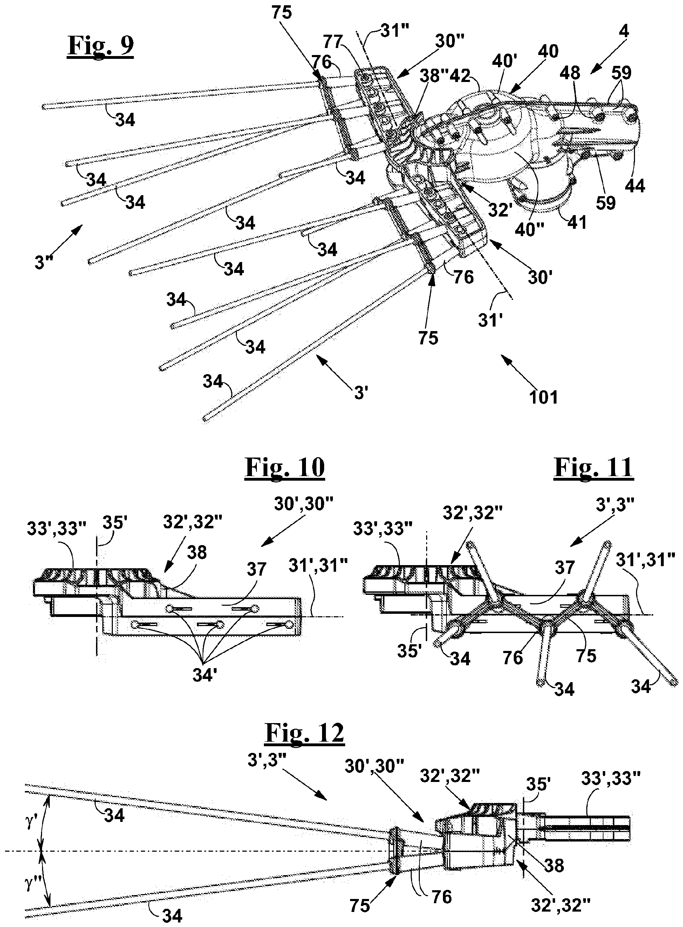

With reference to Fig. 9, another device 101 according to the invention is described. The features of device 101, which are described in respective paragraphs hereinafter, can be present in several devices according to different exemplary embodiments of the invention, independently from one another.

In an exemplary embodiment, box 40 is made of two longitudinal halves 40' and 40" that are mutually connected by conventional connection means such as screws 48 and nuts, more in detail, in an exemplary embodiment, longitudinal halves 40' and 40" comprise flanges 59 for mutual connection.

In an exemplary embodiment, box 40 comprises a first housing 41 for a motor, in particular a battery-supplied electric motor, and a second housing 42 for a motion transmission mechanism from the motor to comb-like elements 3',3". In the case of the box 40 comprising two longitudinal halves 40' and 40", housings 41 and 42 are advantageously symmetrical with respect to the plane at which two halves 40' and 40" are connected. In the shown example, first and second housings 41 and 42 have a substantially cylindrical shape.

In an exemplary embodiment, base members 30',30" of comb-like elements 3',3" have a substantially parallelepiped shape and a substantially empty structure, including a substantially rectangular plane central portion and two edge portions, at opposite sides of the plane portion, along the longer sides larger and along one shorter side of the plane portion, while tang portion 32',32" extends on one side only at the other shorter side, as shown in Fig. 10. Tang portion 32',32" comprises connection part 38 which, in this case, includes a cylindrical crown-shaped portion in which radial reinforcement elements are provided, and also comprises a plane connection portion 33',33".

In the depicted exemplary embodiment, five rods 34 are shown for each comb 3',3". Rods 34 can be different in length, for example they can comprise groups of rods having a same length. Moreover, rods 36 can be at an angle to face 37 of the respective elongated base 30',30" different from the right angle, as described more in detail hereinafter.

In an exemplary embodiment, as show Figs. 9 and 11, at least the innermost rods, i.e., those rods 34 that are most close to each other of two comb-like elements 3',3", are mounted skew with respect to each other, in other words they are neither coplanar nor parallel to each other.

The skew arrangement of innermost rods 34 is maintained during the movement of comb-like elements 3',3" and, in particular, when comb-like elements 3',3" approach the closed configuration, i.e., the minimum mutual angular distance configuration. Therefore, near the closed configuration of comb-like elements 3',3", innermost rods 34 are at a mutual distance longer than a minimum safety distance, which can be predetermined when mounting innermost rods 34 to respective base members 30',30".

This way, innermost rods 34 are prevented from hitting each other or from sliding on each other, or in any case from approaching each other too much, whenever the device comes to the closed configuration, and are prevented from forming a sort of scissors that would damage or in particular cut the branches and the twigs of the plant, and/or would cause device 101 to get caught by the branches and twigs of the plant.

In a modification of this exemplary embodiment, still shown in Figs. 9 and 11, also corresponding rods 34 that have the same rank with respect to the distance from the innermost rods are mounted skew, even in this case to avoid the above-mentioned "scissor effect". This is useful if rods 34 are particularly long and/or particularly close to each other.

The skew arrangement of innermost rods 34 or, more in general, of corresponding rods 34, can be obtained as shown in Fig. 12, i.e., by alternately arranging rods 34 at opposite angles γ', γ" with respect to the normal to face 37 of base 30',30" from which rods 34 extend, observing comb 3',3" along longitudinal axis 31',31" of base 30',30". In the depicted case, angles γ', γ" have substantially a same measure. In a modification of this exemplary embodiment, as shown in Fig. 11, adjacent rods are at angles different from one another, observing transversally to longitudinal axes 31',31", passing from an inward inclination to an outward inclination with respect to device 101.

In the exemplary embodiment of Figs. 9 and 11, in order to maintain a predetermined inclination of each rod 34 with respect to connection face 37 of respective base 30',30", spacers 75 are provided comprising oriented guide tubular elements 76 arranged to be introduced into holes 34' of connection face 37 and to receive respective rods 34 inside themselves, guide tubular elements 76 being at the relative angle at which rods 34 must be positioned. Fig. 11 also shows, conventional fixing means for rods 34, consisting of screws 77 and bolts (not shown).

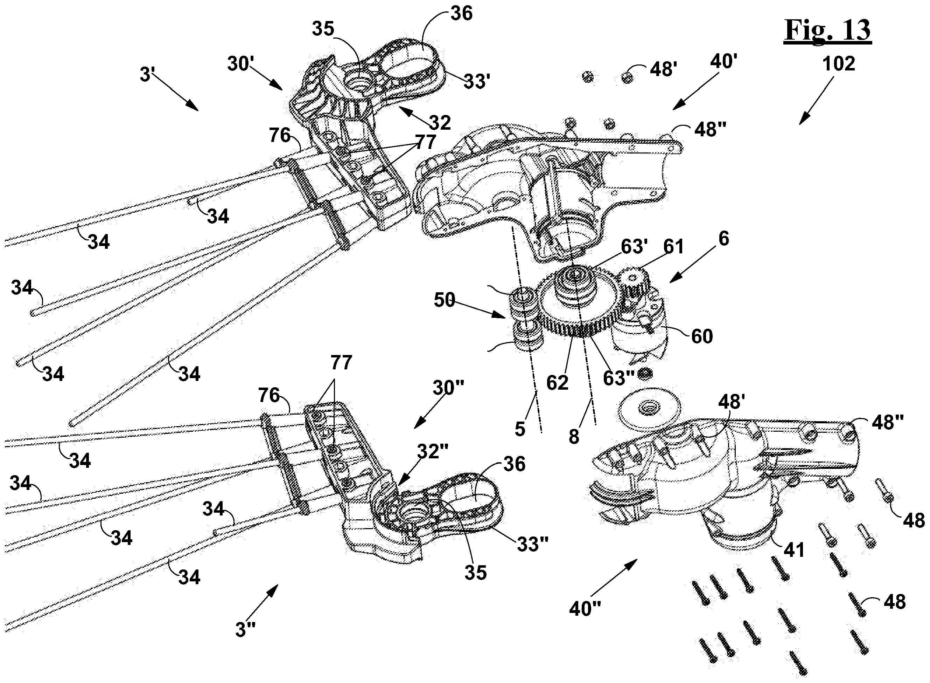

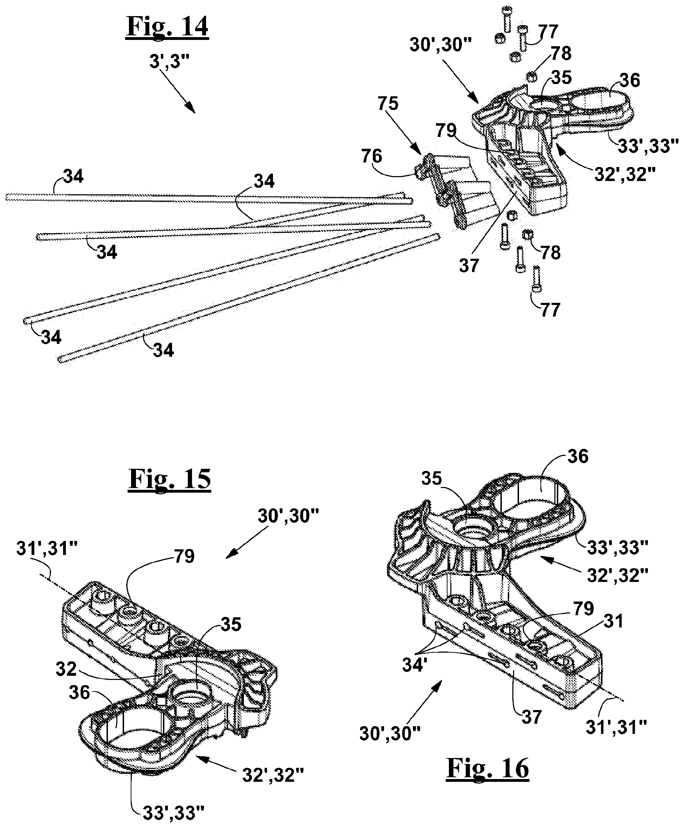

Figs. 13-16 refer to a further device 102 according to the invention, whose features can be present in several devices according to different exemplary embodiments of the invention, independently from one another.

In an exemplary embodiment, drive unit 6 comprises a brushless motor 60, which in this case is arranged within housing 41.

In an exemplary embodiment, tang portion 32',32" of base 30',30" of each comb 3',3" has an elongated hole 36 opposite to comb-like elements 34 with respect to hole 35 of the movable portion of hinge 7',7". This elongated hole 36 is intended for engaging with drive unit 6, which comprises, in addition to motor 60, a couple of cylindrical pins 63',63" each slidingly engaged within elongated hole 36 of a respective comb 3',3". In a modification of this exemplary embodiment, a rolling bearing, not shown, is provided between pins 63',63" and elongated hole 36. Cylindrical pins 63',63" are pivotally actuated by motor 60 and are eccentrically arranged about a second rotation axis 8. Moreover, cylindrical pins 63',63" have axes angularly spaced apart from each other by a predetermined angle about second rotation axis 8. The phase shift of the alternated movements of two comb-like elements 3',3" is defined by this angle. In particular, this angle is selected between 180° and 0°, in order to actuate the comb-like elements symmetrically or parallel to each other, respectively.

In a modification of this exemplary embodiment, at least two gear wheels or two friction wheels 61,62 are provided having a predetermined transmission ratio with respect to each other, so as to form a transmission in which output wheel 62 has second rotation axis 8 as an own rotation axis, and in which cylindrical pins 63',63" are eccentrically arranged on opposite faces of output wheel 62. In this case, the transmission mechanism comprises two cylindrical gears 61 and 62, the former being a drive wheel fitted on the output shaft of motor 60, and the second being a driven wheel 62 having a diameter larger than wheel 61, so as to define the rotations per minute and therefore the period of the alternated movement of comb-like elements 3',3".

Tis modification of the exemplary embodiment is described more in detail in patent application WO/2007/129207, incorporated herein by reference, with reference to Figs. 2 and 3, in which the second rotation axis is indicated as 12, the eccentric pins are indicated as 25 and 26, the driven wheel is indicated as 17 and the tang is indicated as 20, and the bearing 28 arranged between one of eccentric pins 25 and the elongated hole 18 is also shown.

The foregoing description of embodiments of the method and of the apparatus according to the invention will so fully reveal the invention according to the conceptual point of view so that other, by applying current knowledge, will be able to modify and/or adapt in various applications this specific embodiment without further research and without parting from the invention, and, accordingly, it is meant that such adaptations and modifications will have to be considered as equivalent to the exemplified specific embodiments. The means and the materials to put into practice the different functions described herein could have a different nature without, for this reason, departing from the field of the invention. It is meant that the phraseology or terminology employed herein is for the purpose of description and not of limitation.

## Claims

1. A driven portable device (100,101,102) for harvesting small fruits from a plant by causing a vibration or a shaking movement of said plant, said device comprising:
- a support (4) comprising a pole (44) equipped with a handle portion (49) at an end (45) thereof;
- a couple of comb-like elements (3',3") pivotally mounted to said support (4) through respective hinges (7',7"), said hinges (7',7") having respective fixed portions (50) and rotatable portions (33',33"), wherein said comb-like elements (3',3") comprise:
- respective elongated base members (30',30") extending along respective longitudinal axes (31',31");
- respective arrays of rods (34) extending from said elongated base members (30',30") oppositely to said support (4),
wherein said longitudinal axes (31',31") are substantially coplanar arranged in a movement plane (α), so that said comb-like elements are placed beside each other if observed transversally to said longitudinal axes (31',31"),
- a drive unit (6) mounted to said support (4),
**characterized in that** said hinges (7',7") have a same rotation axis (5) substantially orthogonal to said movement plane (α),
**in that** respective tang portions (32',32") extend from said elongated base members (30',30"), away from said movement plane (α), said tang portions comprising said respective rotatable portions (33',33") of said hinges (7',7"), so that said hinges (7',7") have rotation planes (β',β") each at a predetermined distance from said movement plane (α) and opposite to each other with respect to said movement plane (α),
**and in that** said drive unit (6) is arranged for causing each of said rotatable portions (33',33") of said hinges (7',7"), and therefore each of said comb-like elements (3',3"), to perform rotational alternated movements between two limit angular positions with respect to said rotation axis (5).

2. The device (100,101,102) according to claim 1, wherein said drive unit (6) is configured in such a way that said rotational alternated movements of said two comb-like elements (3',3") are synchronous and opposite to each other, such that said two comb-like elements (3',3") periodically move from a contracted configuration, in which the distance of corresponding elements of said comb-like elements (3',3") is at a minimum, to an expanded configuration, in which said distance of said corresponding elements is at a maximum.

3. The device (100,101,102) according to claim 1, wherein said drive unit (6) is configured in such a way that said rotational alternated movements of said two comb-like elements (3',3") are synchronous and parallel to each other, such that the distance of corresponding elements of said two comb-like elements 3',3" is kept substantially unchanged, and said comb-like elements (3',3") periodically moves from one right-displaced configuration to one left-displaced configuration, for someone looking at device (100) from a side.

4. The device (100,101,102) according to claim 1, wherein said hinges (7',7") have a same pin (50) as a fixed portion, said same pin connected to said support and arranged along said rotation axis (5).

5. The device (100,101,102) according to claim 1, wherein said end (45) of said pole (44) is a first end, and said support (4) comprises, at a second end (46) of said pole (44), a box (40), wherein said drive unit (6) is mounted to said box (40).

6. The device (102) according to claim 5, wherein said drive unit (6) comprises a brushless motor (60).

7. The device according to claim 1, wherein said drive unit (6) comprises a motor mounted at said end (45) proximate to said handle portion (49).

8. The device (102) according to claim 1, wherein each of said tang portions (32',32") has an elongated hole (36) and said drive unit (6) comprises:
- a motor (60);
- a couple of cylindrical pins (63',63") each slidingly engaged within said elongated hole of a respective tang portion (32',32"), wherein said cylindrical pins (63',63") are pivotally actuated by said motor (60) and eccentrically arranged about a second rotation axis (8), wherein said cylindrical pins (63',63") are angularly spaced apart about said second rotation axis (8) by a predetermined phase angle.

9. The device (102) according to claim 8, wherein said phase angle is selected between 180° and 0°, such that said rotational alternated movements of said comb-like elements (3',3") are mutually symmetrical movements or mutually parallel movements, respectively.

10. The device (102) according to claim 8, wherein said drive unit (6) comprises at least two gear wheels or two friction wheels (61,62) having a predetermined transmission ratio with respect to each other, said at least two gear wheels or two friction wheels (61,62) forming a motion transmission mechanism, an output wheel (62) of said transmission mechanism having said second rotation axis (8) as an own rotation axis, wherein said cylindrical pins (63',63") are arranged on opposite faces of said output wheel (62).

## Patentansprüche

1. Angetriebene tragbare Vorrichtung (100, 101, 102) zum Ernten kleiner Früchte von einer Pflanze durch Veranlassen einer Vibration oder einer Schüttelbewegung der Pflanze, wobei die Vorrichtung umfasst:
- eine Stütze (4), die eine Stange (44) umfasst, die an einem Ende (45) davon mit einem Griffabschnitt (49) ausgestattet ist;
- ein Paar kammartige Elemente (3', 3"), die über jeweilige Scharniere (7', 7") schwenkbar an der Stütze (4) montiert sind, wobei die Scharniere (7', 7") jeweilige feste Abschnitte (50) und drehbare Abschnitte (33', 33") aufweisen, wobei die kammartigen Elemente (3', 3") umfassen:
- jeweilige längliche Basisglieder (30', 30"), die sich entlang jeweiliger Längsachsen (31', 31") erstrecken;
- jeweilige Anordnungen von Stäben (34), die sich von den länglichen Basisgliedern (30', 30") entgegengesetzt zur Stütze (4) erstrecken,
wobei die Längsachsen (31', 31") im Wesentlichen koplanar in einer Bewegungsebene (α) angeordnet sind, sodass die kammartigen Elemente quer zu den Längsachsen (31', 31") betrachtet nebeneinander platziert sind,
- eine Antriebseinheit (6), die an der Stütze (4) montiert ist,
**dadurch gekennzeichnet, dass** die Scharniere (7', 7") eine gleiche Drehachse (5) aufweisen, die im Wesentlichen orthogonal zur Bewegungsebene (α) ist,
dass sich jeweilige Mitnehmerabschnitte (32', 32") von den länglichen Basisgliedern (30', 30") weg von der Bewegungsebene (α) erstrecken, wobei die Mitnehmerabschnitte die jeweiligen drehbaren Abschnitte (33', 33") der Scharniere (7', 7") umfassen, sodass die Scharniere (7', 7") Drehebenen (β', β") aufweisen, die sich jeweils in einem vorbestimmten Abstand von der Bewegungsebene (α) befinden und in Bezug auf die Bewegungsebene (α) einander gegenüberliegen,
**und dass** die Antriebseinheit (6) dazu angeordnet ist, jeden der drehbaren Abschnitte (33', 33") der Scharniere (7', 7") und damit jedes der kammartigen Elemente (3', 3") zu veranlassen, abwechselnde Drehbewegungen zwischen zwei Grenzwinkelpositionen in Bezug auf die Drehachse (5) durchzuführen.

2. Vorrichtung (100, 101, 102) nach Anspruch 1, wobei die Antriebseinheit (6) derart konfiguriert ist, dass die abwechselnden Drehbewegungen der zwei kammartigen Elemente (3', 3") synchron und entgegengesetzt zueinander erfolgen, sodass sich die zwei kammartigen Elemente (3', 3") periodisch von einer zusammengezogenen Konfiguration, in der der Abstand entsprechender Elemente der kammartigen Elemente (3', 3") minimal ist, in eine expandierte Konfiguration bewegen, in der der Abstand der entsprechenden Elemente maximal ist.

3. Vorrichtung (100, 101, 102) nach Anspruch 1, wobei die Antriebseinheit (6) derart konfiguriert ist, dass die abwechselnden Drehbewegungen der zwei kammartigen Elemente (3', 3") synchron und parallel zueinander erfolgen, sodass der Abstand entsprechender Elemente der zwei kammartigen Elemente 3', 3" im Wesentlichen unverändert bleibt, und sich die kammartigen Elemente (3', 3") für jemanden, der die Vorrichtung (100) von der Seite betrachtet, periodisch von einer nach rechts verschobenen Konfiguration in eine nach links verschobene Konfiguration bewegen.

4. Vorrichtung (100, 101, 102) nach Anspruch 1, wobei die Scharniere (7', 7") einen gleichen Stift (50) als festen Abschnitt aufweisen, wobei der gleiche Stift mit der Stütze verbunden ist und entlang der Drehachse (5) angeordnet ist.

5. Vorrichtung (100, 101, 102) nach Anspruch 1, wobei das Ende (45) der Stange (44) ein erstes Ende ist und die Stütze (4) an einem zweiten Ende (46) der Stange (44) einen Kasten (40) umfasst, wobei die Antriebseinheit (6) an dem Kasten (40) montiert ist.

6. Vorrichtung (102) nach Anspruch 5, wobei die Antriebseinheit (6) einen bürstenlosen Motor (60) umfasst.

7. Vorrichtung nach Anspruch 1, wobei die Antriebseinheit (6) einen Motor umfasst, der an dem Ende (45) in der Nähe des Griffabschnitts (49) montiert ist.

8. Vorrichtung (102) nach Anspruch 1, wobei jeder der Mitnehmerabschnitte (32', 32") ein Langloch (36) aufweist und die Antriebseinheit (6) umfasst:
- einen Motor (60);
- ein Paar zylindrische Stifte (63', 63"), die jeweils gleitend im Langloch eines jeweiligen Mitnehmerabschnitts (32', 32") im Eingriff stehen, wobei
die zylindrischen Stifte (63', 63") durch den Motor (60) schwenkbar betätigt werden und exzentrisch um eine zweite Drehachse (8) herum angeordnet sind, wobei die zylindrischen Stifte (63', 63") um einen vorbestimmten Phasenwinkel um die zweite Drehachse (8) herum winkelmäßig beabstandet sind.

9. Vorrichtung (102) nach Anspruch 8, wobei der Phasenwinkel zwischen 180° und 0° gewählt ist, sodass die abwechselnden Drehbewegungen der kammartigen Elemente (3', 3") jeweils zueinander symmetrische Bewegungen oder zueinander parallele Bewegungen sind.

10. Vorrichtung (102) nach Anspruch 8, wobei die Antriebseinheit (6) mindestens zwei Zahnräder oder zwei Reibräder (61, 62) mit einem vorbestimmten Übersetzungsverhältnis zueinander umfasst, wobei die mindestens zwei Zahnräder oder zwei Reibräder (61, 62) einen Bewegungsübertragungsmechanismus bilden, wobei ein Ausgangsrad (62) des Übertragungsmechanismus die zweite Drehachse (8) als eigene Drehachse aufweist, wobei die zylindrischen Stifte (63', 63") auf gegenüberliegenden Flächen des Ausgangsrads (62) angeordnet sind.

## Revendications

1. Dispositif portable entraîné (100, 101, 102) pour récolter de petits fruits d'une plante en provoquant une vibration ou un mouvement de secousse de ladite plante, ledit dispositif comprenant :
- un support (4) comprenant un poteau (44) équipé d'une partie poignée (49) au niveau d'une extrémité (45) de celui-ci ;
- un couple d'éléments en forme de peigne (3', 3") montés de manière pivotante sur ledit support (4) par l'intermédiaire de charnières respectives (7', 7"), lesdites charnières (7', 7") comportant des parties fixes respectives (50) et des parties rotatives (33', 33"), lesdits éléments en forme de peigne (3', 3") comprenant :
- des éléments de base allongés respectifs (30', 30") s'étendant le long d'axes longitudinaux respectifs (31', 31") ;
- des réseaux respectifs de tiges (34) s'étendant depuis lesdits éléments de base allongés (30', 30") à l'opposé dudit support (4),
lesdits axes longitudinaux (31', 31") étant disposés sensiblement coplanaires dans un plan de mouvement (α), de façon à ce que lesdits éléments en forme de peigne soient placés les uns à côté des autres s'ils sont observés transversalement auxdits axes longitudinaux (31', 31"),
- une unité d'entraînement (6) montée sur ledit support (4),
**caractérisé en ce que** lesdites charnières (7', 7") présentent un même axe de rotation (5) sensiblement orthogonal audit plan de mouvement (α),
**en ce que** les parties de tige respectives (32', 32") s'étendent depuis lesdits éléments de base allongés (30', 30"), en s'éloignant dudit plan de mouvement (α), lesdites parties de tige comprenant lesdites parties rotatives respectives (33', 33") desdites charnières (7', 7"), de façon à ce que lesdites charnières (7', 7") présentent des plans de rotation (β', β") chacun à une distance prédéfinie dudit plan de mouvement (α) et opposés l'un à l'autre par rapport audit plan de mouvement (α),
**et en ce que** ladite unité d'entraînement (6) est agencée pour amener chacune desdites parties rotatives (33', 33") desdites charnières (7', 7"), et donc chacun desdits éléments en forme de peigne (3', 3"), à effectuer des mouvements de rotation alternés entre deux positions angulaires limites par rapport audit axe de rotation (5).

2. Dispositif (100, 101, 102) selon la revendication 1, ladite unité d'entraînement (6) étant conçue de façon à ce que lesdits mouvements de rotation alternés desdits deux éléments en forme de peigne (3', 3") soient synchrones et opposés l'un à l'autre, de façon à ce que lesdits deux éléments en forme de peigne (3', 3") se déplacent périodiquement d'une configuration contractée, dans laquelle la distance des éléments correspondants desdits éléments en forme de peigne (3', 3") est au minimum, à une configuration déployée, dans laquelle ladite distance desdits éléments correspondants est à un maximum.

3. Dispositif (100, 101, 102) selon la revendication 1, ladite unité d'entraînement (6) étant conçue de façon à ce que lesdits mouvements de rotation alternés desdits deux éléments en forme de peigne (3', 3") soient synchrones et parallèles l'un à l'autre, de façon à ce que la distance des éléments correspondants desdits deux éléments en forme de peigne (3', 3") demeure sensiblement inchangée, et lesdits éléments en forme de peigne (3', 3") se déplacent périodiquement d'une configuration déplacée vers la droite à une configuration déplacée vers la gauche, pour quelqu'un qui regarde le dispositif (100) de côté.

4. Dispositif (100, 101, 102) selon la revendication 1, lesdites charnières (7', 7") présentant une même broche (50) comme partie fixe, ledit même axe étant relié audit support et disposé le long dudit axe de rotation (5).

5. Dispositif (100, 101, 102) selon la revendication 1, ladite extrémité (45) dudit poteau (44) étant une première extrémité, et ledit support (4) comprenant, au niveau d'une seconde extrémité (46) dudit poteau (44), un boîtier (40), ladite unité d'entraînement (6) étant montée sur ledit boîtier (40).

6. Dispositif (102) selon la revendication 5, ladite unité d'entraînement (6) comprenant un moteur sans balais (60).

7. Dispositif selon la revendication 1, ladite unité d'entraînement (6) comprenant un moteur monté au niveau de ladite extrémité (45) à proximité de ladite partie poignée (49).

8. Dispositif (102) selon la revendication 1, chacune desdites parties de tige (32', 32") possédant un trou allongé (36) et ladite unité d'entraînement (6) comprenant :
- un moteur (60) ;
- un couple de broches cylindriques (63', 63"), chacune engagée de manière coulissante dans ledit trou allongé d'une partie de tige respective (32', 32"), lesdites broches cylindriques (63', 63") étant actionnées de manière pivotante par ledit moteur (60) et disposées de manière excentrique autour d'un second axe de rotation (8), lesdites broches cylindriques (63', 63") étant espacées angulairement autour dudit second axe de rotation (8) d'un angle de phase prédéfini.

9. Dispositif (102) selon la revendication 8, ledit angle de phase étant sélectionné entre 180° et 0°, de façon à ce que lesdits mouvements de rotation alternés desdits éléments en forme de peigne (3', 3") soient des mouvements mutuellement symétriques ou mutuellement parallèles, respectivement.

10. Dispositif (102) selon la revendication 8, ladite unité d'entraînement (6) comprenant au moins deux roues dentées ou deux roues à friction (61, 62) présentant un rapport de transmission prédéfini l'une par rapport à l'autre, lesdites au moins deux roues dentées ou deux roues à friction (61, 62) formant un mécanisme de transmission de mouvement, une roue de sortie (62) dudit mécanisme de transmission présentant ledit second axe de rotation (8) comme axe de rotation propre, lesdites broches cylindriques (63', 63") étant disposés sur des faces opposées de ladite roue de sortie (62).
